# EUROPEAN PATENT SPECIFICATION

(11) **EP 4 224 930 B1**
(45) Date of publication and mention of the grant of the patent: **16.07.2025**
(21) Application number: 21875948.8
(22) Date of filing: 08.09.2021
(51) Int. Cl.: H04W 60/06, H04W 36/00, H04W 60/04, H04W 8/06

(54) **SUPPORT OF SERVICE CONTINUITY FOR HOME-ROUTED PDU SESSION WHEN THERE IS NO N14 INTERFACE BETWEEN SOURCE NETWORK AND TARGET NETWORK**
UNTERSTÜTZUNG DER DIENSTKONTINUITÄT FÜR EINE HEIMGEROUTETE PDU-SITZUNG OHNE N14-SCHNITTSTELLE ZWISCHEN QUELLNETZWERK UND ZIELNETZWERK
SUPPORT DE CONTINUITÉ DE SERVICE POUR UNE SESSION PDU À ROUTAGE DOMESTIQUE LORSQU'IL N'Y A PAS D'INTERFACE N14 ENTRE UN RÉSEAU SOURCE ET UN RÉSEAU CIBLE

(30) Priority: 29.09.2020 KR 20200127276
(43) Date of publication of application: 09.08.2023
(73) Proprietor: LG Electronics Inc., Yeongdeungpo-gu Seoul, 07336 (KR)
(72) Inventor: KIM, Seokjung, Seoul 06772 (KR); YOUN, Myungjune, Seoul 06772 (KR); KIM, Laeyoung, Seoul 06772 (KR); XU, Jian, Seoul 06772 (KR); BYUN, Daewook, Seoul 06772 (KR)
(74) Representative: Plasseraud IP
(86) International application number: PCT/KR2021/012179
(87) International publication number: WO 2022/071673

(56) References cited:
- WO-A1-2018/097601
- KR-A- 20190 060 667
- KR-A- 20200 004 371
- US-A1- 2018 376 445
- US-A1- 2019 174 449
- "3rd Generation Partnership Project; Technical Specification Group Services and System Aspects; Procedures for the 5G System (5GS); Stage 2 (Release 16)", vol. SA WG2, no. V16.6.0, 24 September 2020 (2020-09-24), pages 1 - 597, XP051960894, Retrieved from the Internet <URL:ftp://ftp.3gpp.org/Specs/archive/23_series/23.502/23502-g60.zip 23502-g60.docx> [retrieved on 20200924]
- TELECOM ITALIA ET AL: "Clarification on the use of reference points N14 and N26", vol. SA WG2, no. Incheon, Korea; 20200113 - 20200117, 15 January 2020 (2020-01-15), XP051843822, Retrieved from the Internet <URL:https://ftp.3gpp.org/tsg_sa/WG2_Arch/TSGS2_136AH_Incheon/Docs/S2-2001067.zip S2-2001067 was 700 N14 & N26 use CR23.501.docx> [retrieved on 20200115]
- NOKIA, NOKIA SHANGHAI BELL: "KI #1, Sol #2: Updated to enhance and support SNPN along with credentials owned by an entity separate from the SNPN", 3GPP DRAFT; S2-2004140, vol. SA WG2, 22 May 2020 (2020-05-22), pages 1 - 8, XP051890146
- PHILIPS: "KI#2, Sol #1,#2,#11 Update to remove ENs on isolated networks", 3GPP DRAFT; S2-2005796, vol. SA WG2, 13 August 2020 (2020-08-13), Electronic, Elbonia, pages 1 - 5, XP051920602

## Description

### TECHNICAL FIELD

The present disclosure relates to support of service continuity for Home-Routed Protocol Data Unit (PDU) sessions when there is no N14 interface between a source network and a target network.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Non-public networks (NPN) are intended for the sole use of a private entity such as an enterprise, and may be deployed in a variety of configurations, utilizing both virtual and physical elements. Specifically, they may be deployed as completely standalone networks, they may be hosted by a public land mobile network (PLMN), or they may be offered as a slice of a PLMN.

In any of these deployment options, it is expected that unauthorized user equipments (UEs), those that are not associated with the enterprise, will not attempt to access the non-public network, which could result in resources being used to reject that UE and thereby not be available for the UEs of the enterprise. It is also expected that UEs of the enterprise will not attempt to access a network they are not authorized to access. For example, some enterprise UEs may be restricted to only access the non-public network of the enterprise, even if PLMN coverage is available in the same geographic area. Other enterprise UEs may be able to access both a non-public network and a PLMN where specifically allowed.

US 2019/0174449 A1 discloses a method for indicating local area data network (LADN) data network names (DNNs). A UE provides a list of configured LADN DNNs in a registration request message during a registration procedure. An Access and Mobility Management Function (AMF) determines LADN information for the UE by looking into configured LADN DNNs in the AMF and/or retrieved LADN authorization/subscription information. The LADN information includes a list of LADN DNNs and corresponding LADN service area(s) that the UE can use, including LADN DNNs that the UE can use in a current registration area. The AMF sends the LADN information to the UE in a registration accept message.

### TECHNICAL PROBLEM

In situations where a UE connects to a Standalone NPN (SNPN) using credentials belonging to an entity separate from the SNPN, there is a need to support service continuity if that UE moves.

### TECHNICAL SOLUTION

The invention is as defined in the appended claims.

In another aspect, which is not specifically claimed herein, a method performed by a User Equipment (UE) operating in a wireless communication system is provided. The method comprises moving from a source network to a target network and transmitting a registration request message of a second registration procedure to an Access and mobility Management Function (AMF) of the target network. The registration request message includes i) a Registration Type set to Mobility Registration Update, ii) a 5G Globally Unique Temporary Identifier (5G-GUTI) of the UE assigned by the source network; and iii) an indicator indicating that the UE has moved from another network.

### ADVANTAGEOUS EFFECTS

The present disclosure may have various advantageous effects.

For example, during the registration procedure with the target network, the source network may delay and/or withhold deleting the context for an existing established HR PDU session. Thus, service continuity can be supported through an existing HR PDU session without requiring additional procedures to establish a new PDU session.

For example, the source network can inform the UE in advance whether it supports the N14 interface during the registration procedure. Thus, the UE can directly perform the initial registration procedure with the target network based on the network configuration and reduce the registration-related signaling between the UE and the AMF of the target network.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of 5G system architecture to which implementations of the present disclosure is applied.
FIGS. 6 and 7 show an example of a registration procedure to which implementations of the present disclosure is applied.
FIG. 8 shows an example of non-roaming architecture for 5GC with untrusted non-3GPP access to which implementations of the present disclosure is applied.
FIG. 9 shows an example of a method performed by an AMF of a source network to which implementations of the present disclosure is applied.
FIG. 10 shows an example of a method performed by a UE to which implementations of the present disclosure is applied.
FIGS. 11 to 13 show an example of procedure to support service continuity for HR PDU session in absence of N14 interface between a source network and a target network, to which the first implementation of the present disclosure is applied.
FIG. 14 shows an example of procedure to support service continuity for HR PDU session in absence of N14 interface between a source network and a target network, to which the second implementation of the present disclosure is applied.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

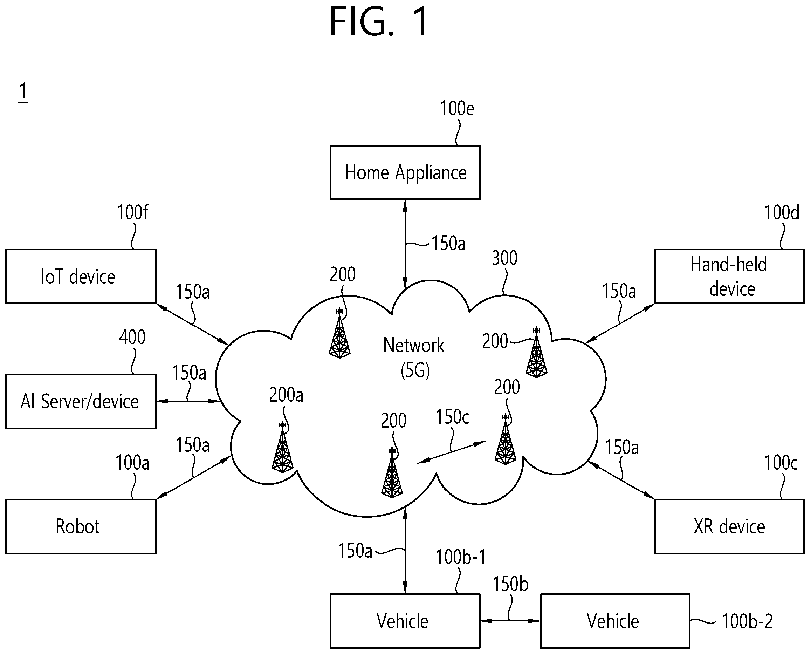

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

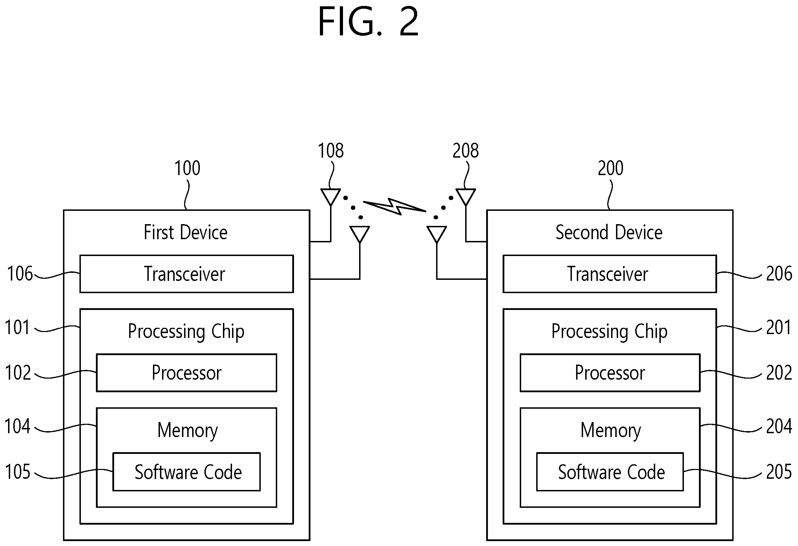

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

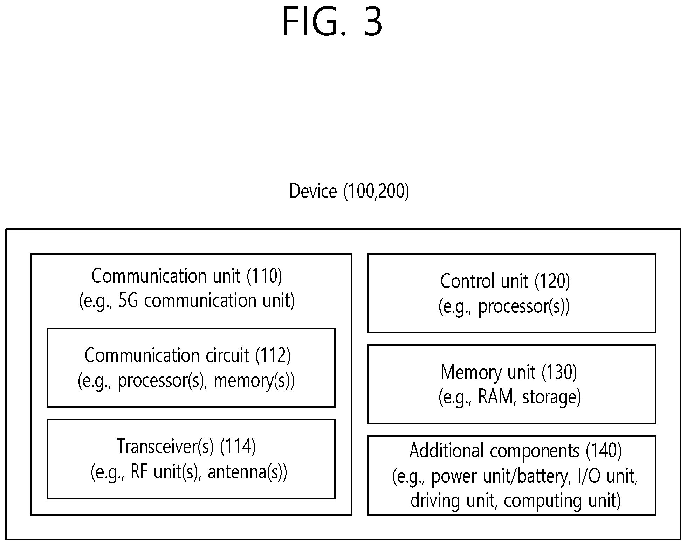

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

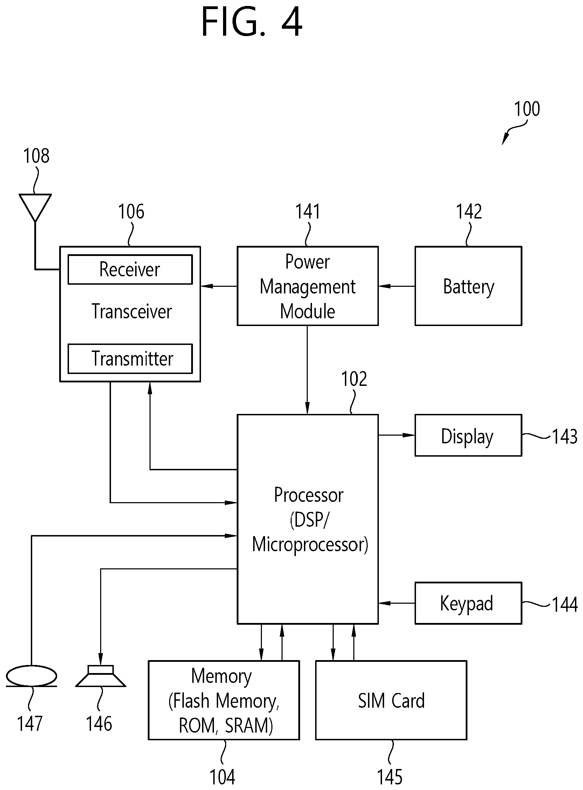

FIG. 4 shows an example of UE to which implementations of the present disclosure is applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

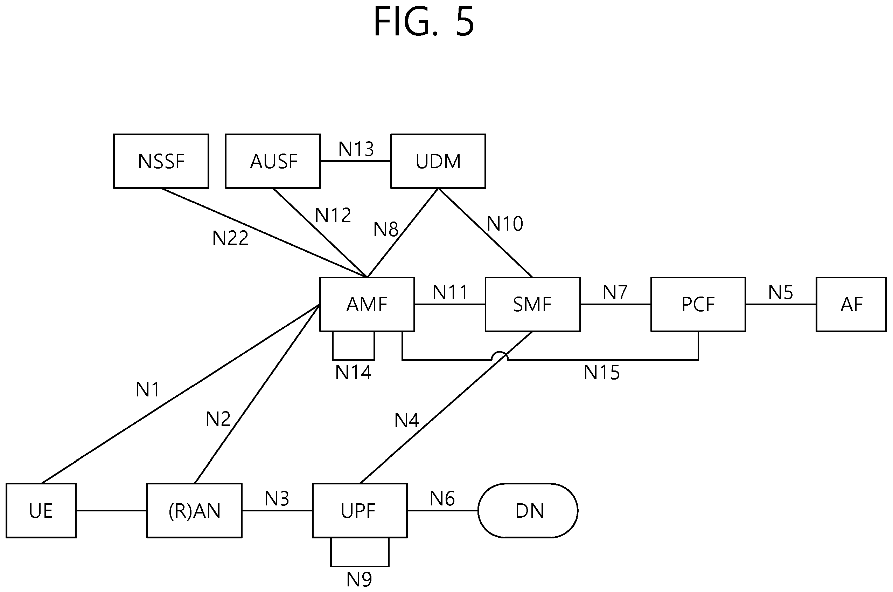

FIG. 5 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

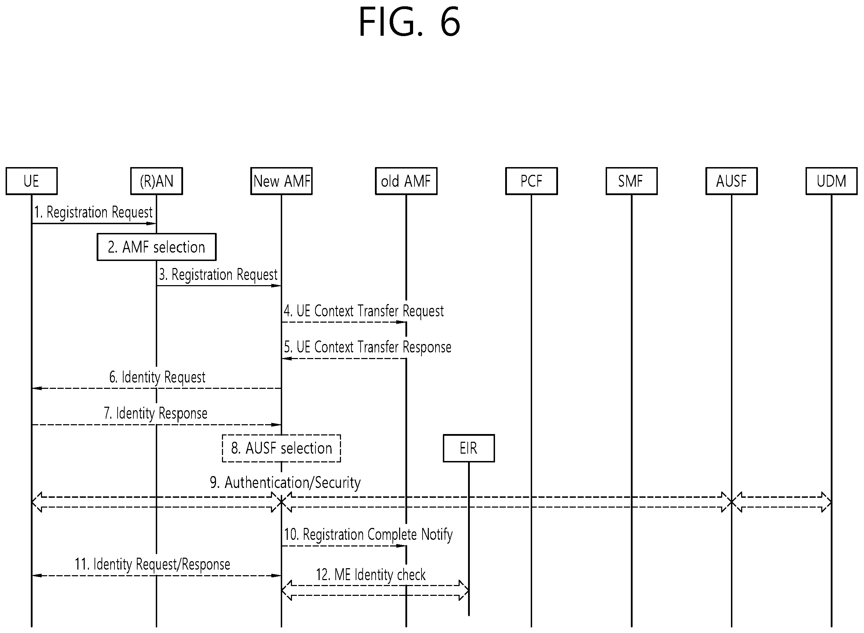

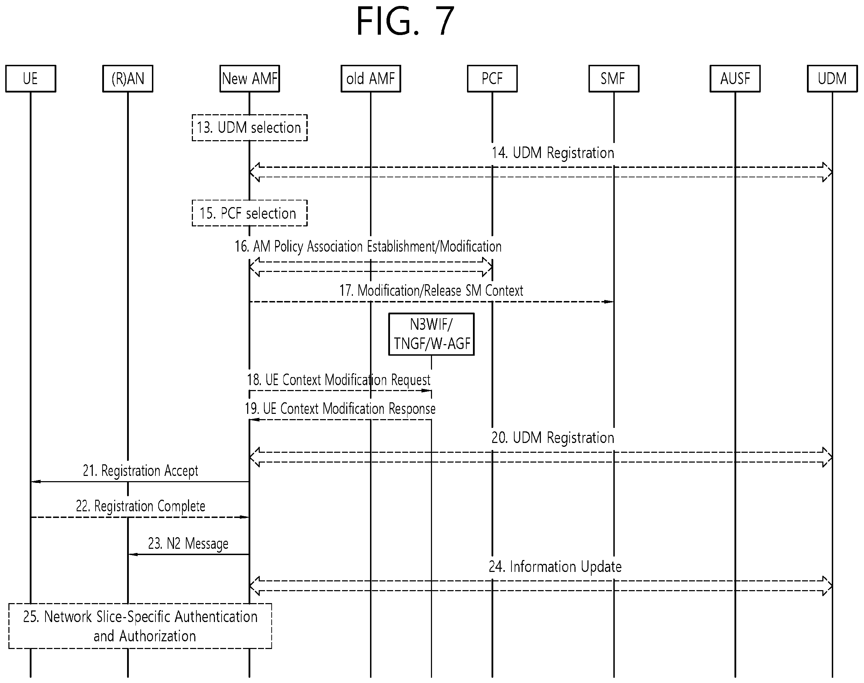

FIGS. 6 and 7 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir _EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

Support of non-3GPP access is described. Section 4.2.8.1 of 3GPP TS 23.501 V16.3.0 (2019-12) can be referred.

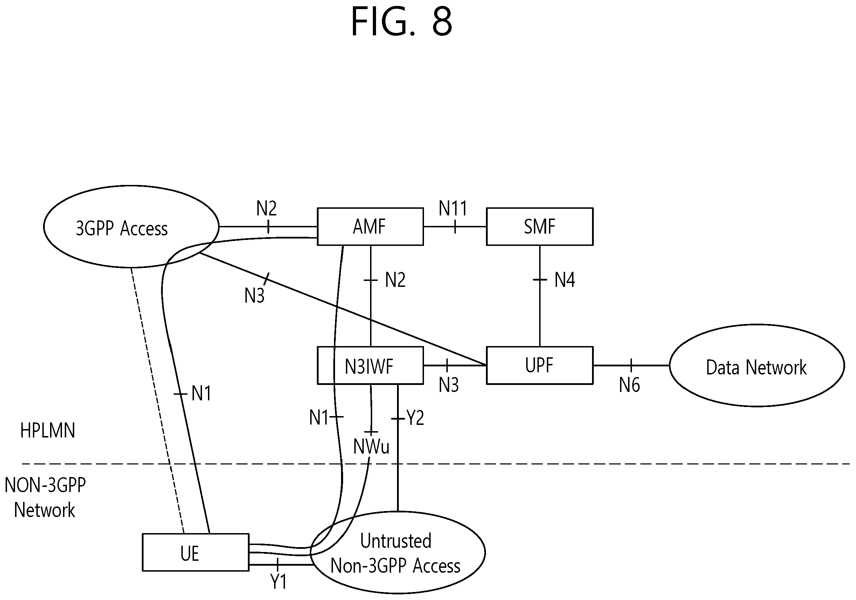

FIG. 8 shows an example of non-roaming architecture for 5GC with untrusted non-3GPP access to which implementations of the present disclosure is applied.

The 5G Core Network supports connectivity of UEs via non-3GPP access networks, e.g., wireless local area network (WLAN) access networks.

The 5G Core Network supports both untrusted non-3GPP access networks and trusted non-3GPP access networks (TNANs).

An untrusted non-3GPP access network shall be connected to the 5G Core Network via a N3IWF, whereas a trusted non-3GPP access network shall be connected to the 5G Core Network via a TNGF. Both the N3IWF and the TNGF interface with the 5G Core Network CP and UP functions via the N2 and N3 interfaces, respectively.

A non-3GPP access network may advertise the PLMNs for which it supports trusted connectivity and the type of supported trusted connectivity (e.g., "5G connectivity"). Therefore, the UEs can discover the non-3GPP access networks that can provide trusted connectivity to one or more PLMNs.

When the UE decides to use untrusted non-3GPP access to connect to a 5G Core Network in a PLMN:
- the UE first selects and connects with a non-3GPP access network; and then
- the UE selects a PLMN and an N3IWF in this PLMN. The PLMN/N3IWF selection and the non-3GPP access network selection are independent.

When the UE decides to use trusted non-3GPP access to connect to a 5G Core Network in a PLMN:
- the UE first selects a PLMN; and then
- the UE selects a non-3GPP access network (a TNAN) that supports trusted connectivity to the selected PLMN. In this case, the non-3GPP access network selection is affected by the PLMN selection.

A UE that accesses the 5G Core Network over a standalone non-3GPP access shall, after UE registration, support NAS signaling with 5G Core Network control-plane functions using the N1 reference point.

When a UE is connected via a NG-RAN and via a standalone non-3GPP access, multiple N1 instances shall exist for the UE, i.e., there shall be one N1 instance over NG-RAN and one N1 instance over non-3GPP access.

A UE simultaneously connected to the same 5G Core Network of a PLMN over a 3GPP access and a non-3GPP access shall be served by a single AMF in this 5G Core Network.

When a UE is connected to a 3GPP access of a PLMN, if the UE selects a N3IWF and the N3IWF is located in a PLMN different from the PLMN of the 3GPP access, e.g., in a different VPLMN or in the HPLMN, the UE is served separately by the two PLMNs. The UE is registered with two separate AMFs. PDU sessions over the 3GPP access are served by V-SMFs different from the V-SMF serving the PDU Sessions over the non-3GPP access. The same can be true when the UE uses trusted non-3GPP access, i.e., the UE may select one PLMN for 3GPP access and a different PLMN for trusted non-3GPP access.

The PLMN selection for the 3GPP access does not depend on the PLMN that is used for non-3GPP access. In other words, if a UE is registered with a PLMN over a non-3GPP access, the UE performs PLMN selection for the 3GPP access independently of this PLMN.

A UE shall establish an IPsec tunnel with the N3IWF or with the TNGF in order to register with the 5G Core Network over non-3GPP access.

It shall be possible to maintain the UE NAS signaling connection with the AMF over the non-3GPP access after all the PDU sessions for the UE over that access have been released or handed over to 3GPP access.

N1 NAS signaling over standalone non-3GPP accesses shall be protected with the same security mechanism applied for N1 over a 3GPP access.

Stand-alone non-public network (SNPN) is described. Section 5.30.2 of 3GPP TS 23.501 V16.3.0 (2019-12) can be referred.

An SNPN is operated by an NPN operator and not relying on network functions provided by a PLMN. On the other hand, a public network integrated (PNI) NPN is a non-public network deployed with the support of a PLMN.

SNPN 5GS deployments are based on the architecture depicted above in FIG. 5, the architecture for 5GC with untrusted non-3GPP access, described above in FIG. 8, for access to SNPN services via a PLMN (and vice versa) and the additional functionality described below.

Interworking with EPS is not supported for SNPN.

The combination of a PLMN ID and network identifier (NID) identifies an SNPN.

The NID shall support two assignment models:
- Self-assignment: NIDs are chosen individually by SNPNs at deployment time (and may therefore not be unique) but use a different numbering space than the coordinated assignment NIDs.
- Coordinated assignment: NIDs are assigned using one of the following two options:
   1) The NID is assigned such that it is globally unique independent of the PLMN ID used; or
   2) The NID is assigned such that the combination of the NID and the PLMN ID is globally unique.

An optional human-readable network name helps to identify an SNPN during manual SNPN selection.

When a UE is set to operate in SNPN access mode, the UE does not perform normal PLMN selection procedures.

UEs operating in SNPN access mode read the available PLMN IDs and list of available NIDs from the broadcast system information and take them into account during network selection.

For automatic network selection, the UE selects and attempts to register with the available SNPN identified by a PLMN ID and NID for which the UE has SUPI and credentials.

For manual network selection, UEs operating in SNPN access mode provide to the user the list of NIDs and related human-readable names (if available) of the available SNPNs the UE has respective SUPI and credentials for.

When a UE performs initial registration to an SNPN, the UE shall indicate the selected NID and the corresponding PLMN ID to NG-RAN. NG-RAN shall inform the AMF of the selected PLMN ID and NID.

To access PLMN services, a UE in SNPN access mode that has successfully registered with an SNPN may perform another registration via the SNPN user plane with a PLMN (using the credentials of that PLMN) following the same architectural principles as specified above for the non-3GPP access and the SNPN taking the role of "Untrusted non-3GPP access" in FIG. 8.

To access SNPN services, a UE that has successfully registered with a PLMN may perform another registration via the PLMN user plane with an SNPN (using the credentials of that SNPN) following the same architectural principles as specified above for the non-3GPP access and the PLMN taking the role of "Untrusted non-3GPP access" in FIG. 8.

One of the objectives for enhancements of NPN in 3GPP Rel-17 is to support service continuity for UE mobility in situations where the UE has accessed the SNPN using credentials owned by an entity separate from the SNPN. For example, a scenario may be considered where a UE accesses to SNPN #1 using credentials owned by a separate entity, and the UE moves from SNPN #1 to SNPN #2. As another example, a scenario may be considered where a UE accesses SNPN #1 using credentials owned by a PLMN, and the UE moves from SNPN #1 to that PLMN.

To support service continuity for the UE mobility, two solutions may be considered as follows.

### 1. Solution 1: SNPN supporting service providers

In solution 1, the following definitions may be used.

Visited-SNPN (V-SNPN): An SNPN for which the UE does not have a subscription associated with the SNPN's identity (PLMN ID and NID combination) and which supports access using credentials (Home SP credentials) owned by an entity separate from the SNPN.

Home Service Provider (Home SP): An entity separate from the SNPN that supports that its subscription is used to access a (different) SNPN. Also referred simply as "Service Provider".

The following are the main principles of the solution 1.
- It is assumed that there is a Service Level Agreement (SLA) between the SNPN owner and the SP.
- The SP owns the subscription of the UE(s) and SNPN provides access and connectivity for the UE. When the SP uses PLMN credentials for its subscribers, the UE uses USIM credentials.
- For each subscription with a SP, the UE is configured with an "Equivalent Home Service Provider" list and/or a "Service Provider Controlled Network Selector" list and/or "User Controlled Network Selector" list that assists the UE in network selection.

### Solution 1 has the following assumptions.

- A SNPN has control plane and optionally user plane interfaces with one or more SPs. At the minimum, the 5GC of the SNPN needs to have an interface with the AUSF/UDM residing in the SP.
- For the case where SP=SNPN: the network selection is controlled via configured lists (refer to the "Equivalent Home Service Provider" list, "Service Provider Controlled Network Selector" list and "User Controlled Network Selector" list) which include (PLMN ID, NID) tuples. The SNPN selection follows the principles of PLMN selection by replacing PLMN IDs with (PLMN ID, NID) tuples.
- For the case where SP=PLMN: the network selection is controlled via configured lists (refer to the "Equivalent Home Service Provider" list, "Service Provider Controlled Network Selector" list and "User Controlled Network Selector" list) which include a mix of both PLMN IDs and (PLMN ID + NID) tuples. The SNPN selection is fully integrated into PLMN selection.

### Solution 1 is based on the following principles.

- The UE has subscription with SP identified with a SP ID. The SP identifier may be identified by a PLMN ID or PLMN ID+NID.
- When the SP of the UE is identified by a PLMN ID, the UE subscription data and credentials are stored at the UDM/UDR and the UE uses USIM credentials.
- The SNPN can provide local services to the UE, or provide access to the SP services.
- When the SP of the UE is identified by a PLMN ID, the SNPN selects the Session Management Function (SMF) and PDU Session Anchor (PSA) in the SP to support PDU sessions that require service continuity. Mobility in the absence of the N14 interface between SNPN and PLMN is handled by the "Existing PDU Session" indication in the PDU Session Establishment Request.
- When the SP of the UE is a SNPN, the UE subscription data and credentials are maintained by the SNPN. The UE has subscription with the SP which is a SNPN and the UE is authorized to services provided by the SNPN.
- The NG-RAN nodes in the SNPN broadcasts a list of combined PLMN IDs and NIDs identifying the SNPNs to which the NG-RAN provides access.

The UE is configured with the following.
- Subscriber ID and credentials for the subscribed SP (which is identified by PLMN ID or a combination of PLMN ID and NID).
- A "Service Provider Controlled Network Selector" list which is modelled based on the Operator Controlled PLMN Selector with Access Technology list. This list can include both PLMN IDs and (PLMN ID, NID) tuples (case where SP=PLMN) or only (PLMN ID, NID) tuples (case where SP=SNPN) ranked in priority order.
- A "User Controlled Network Selector" list which is modelled based on the User Controlled PLMN Selector with Access Technology list. This list can include both PLMN IDs and (PLMN ID, NID) tuples (case where SP=PLMN) or only (PLMN ID, NID) tuples (case where SP=SNPN) ranked in priority order.
- In addition, the UE may be configured with an "Equivalent Home SP" list which is modelled based on the EHPLMN list. This list can include both PLMN IDs and (PLMN ID, NID) tuples (case where SP=PLMN) or only (PLMN ID, NID) tuples (case where SP=SNPN) ranked in priority order.
- The above information can be updated by a Home SP using the UE Configuration Update procedure. An alternative is to use the UE parameter update procedure.

If the Rel-17 UE does not need to be prevented from attempting to register with a Rel-16 SNPN completely, the Rel-17 UE may attempt to connect to a Rel-16 SNPN (e.g., because the serving SNPN ID is configured in the UE configured lists). In this case, the SNPN rejects the registration attempt with an appropriate rejection cause (e.g., #74 (Temporarily not authorized for this SNPN) or #75 (Permanently not authorized for this SNPN). This will prevent the Rel-17 UEs (either temporarily or permanently) from future registration attempts with this SNPN.

If the Rel-17 UE needs to be prevented from attempting to register with a Rel-16 SNPN completely, then it is proposed to use a new SIB indication (with the meaning "access using Home SP credentials is supported") so that Rel-17 UEs can only attempt to connect to an SNPN using Home SP credentials when this indication is advertised.

The principles for SNPN discovery and selection with support for SPs is as given below.
- UE has subscription with a SP identified in the configured lists in the UE by its PLMN ID or combination of PLMN ID and NID. (For example - identified as SP#X).
- SP#X has an agreement with SNNOP (NPN#A) that is identified in the information broadcasted on the radio interface by its combination of PLMN ID and NID (For example - identified as NPN#A), allowing the UEs that have subscription with SP#X to access the services of SP#X via NPN#A.
- The UE has a stored "Service Provider Controlled Network Selector" list and/or a "User Controlled Network Selector" list, and optionally an "Equivalent Home Service Provider" list, that contains both SP#X and NPN#A.
- The radio access network of NPN#A broadcasts its own ID, i.e., NPN#A.
- The UE which has subscription with SP #X selects NPN #A if NPN #A is configured in one of UE's configured lists. The UE evaluates the configured lists in the following precedence order for network selection: first "Equivalent Home Service Provider" list, then "User Controlled Network Selector" list, then "Service Provider Controlled Network Selector" list. This is similar as EHPLMN list has higher priority than Operator Controlled PLMN Selector list.

If the UE is in coverage of the SP's SNPN (i.e., the information broadcasted on the radio interface includes the PLMN ID + NID tuple of the SNPN), the UE selects this SNPN.
- Once the network selection is complete, the UE registers with the network by providing the UE ID (including the SP identity, e.g., as part of the "realm" part in the UE ID) and credential corresponding to the SP. It is assumed that the authentication request is routed to UDM in the SP's administrative domain.
- If during network selection the UE has exhausted all the PLMN ID or PLMN ID + NID tuples in the configured list without finding a match with the information advertised on the radio interface, the UE does not attempt to register with any SNPN.
- If the UE has subscriptions with multiple SPs, solution 1 assumes that the user selects the subscription which it wants to use before network selection is triggered.

### 2. Solution 2: SNPN access using credentials owned by an entity separate from the SNPN

Key idea of solution 2 is that a V-SNPN broadcasts information that enables a UE to determine whether the UE can access the V-SNPN using any of the Home SP credentials that the UE is configured with.

In particular, a V-SNPN may broadcast IDs of Home SPs that the V-SNPN has an agreement with, i.e., which supports access to the V-SNPN using the credentials of those Home SPs.

A V-SNPN may also broadcast the IDs of Home SP Groups that the V-SNPN has an agreement with for access to the V-SNPN using the credentials of any of the Home SPs that are part of the Home SP Group. The UE is assumed to be configured by the Home SP with one or more Home SP Groups that the Home SP is part of so that the UE can select a V-SNPN that supports one of the Home SP Groups the UE is configured with. One benefit of the Home SP Group is that the V-SNPN does not need to broadcast the IDs of all the Home SPs that are part of the Home SP Group but only needs to broadcast the Home SP Group ID instead.

Home SP Group examples include the followings.
1) National operating companies of a multi-national operator: By broadcasting the Home SP Group ID assigned to the multi-national operator, a V-SNPN can enable the UEs from all the national operating companies of the multi-national operator to select the V-SNPN.
2) Home SPs that are connected to an interconnection provider
   - Typically, mobile operators have direct interconnections and agreements only with large partner networks.
   - For the large amount of small partner networks, mobile operators typically use the services of an interconnection provider that provides interconnection with a large amount of partner networks while avoiding the need for bilateral agreements and interconnections.
   - By broadcasting the Home SP Group ID assigned to the interconnection provider, a V-SNPN can enable the UEs from all the Home SPs connected to the interconnection provider to select the V-SNPN. Also, there is no need for the Home SPs to maintain an accurate list of all the supported V-SNPNs.

In solution 2, the following definitions may be used.
- V-SNPN: An SNPN for which the UE does not have a subscription associated with the SNPN's identity (PLMN ID and NID combination) and which supports access using credentials owned by an entity separate from the SNPN (Home SP credentials).
- Home SP: A PLMN or an SNPN that supports that its subscription is used to access a (different) SNPN.
- Home SP subscription: A subscription issued by an SNPN or a PLMN.
- Home SP-ID: Identifies the Home-SP that issued the subscription that a UE is using to access a V-SNPN. The Home SP ID consists of a PLMN ID, if the Home SP is a PLMN or a PLMN and NID, if the Home SP is an SNPN.
- Home SP Group: A group of Home SPs that a V-SNPN has an agreement with for access to the V-SNPN using the credentials of any of the Home SPs that are part of the Home SP Group.
- Home SP Group ID: Identifies a Home SP Group.

NG-RAN nodes which support access using Home SP credentials broadcast the following information per SNPN:
- Indication that access using Home SP credentials is supported
- List of supported Home SP IDs
- List of supported Home SP Group IDs

A UE is configured with a Home SP subscription and the corresponding Home SP ID.

For SNPN subscription, a Home SP subscription issued by an SNPN may optionally contain the following additional information.
- User-controlled prioritized list of preferred SNPNs
- Home SP-controlled prioritized list of preferred SNPNs and Home SP Groups

The above information (except the user-controlled list) can be updated by the Home SP using the UE Configuration Update procedure.

For SNPN subscription, the UE operates in SNPN access mode.

For PLMN subscription, a Home SP subscription issued by a PLMN may optionally contain the following additional information.
- User-controlled prioritized list of preferred SNPNs, preferred PLMNs
- Home SP-controlled prioritized list of preferred SNPNs, preferred PLMNs and Home SP Groups
- Visited Network Type Preference (PLMN preferred or SNPN preferred or PLMN only, or SNPN only)

The above information (except the user-controlled list) can be updated by the Home SP using the UE Configuration Update procedure.

For PLMN subscription, the UE does not operate in SNPN access mode.

The procedures for using an SNPN subscription are described.

In automatic network selection and registration procedure, if the UE's Home SP network is not available, then the UE discovers and selects an SNPN as follows.
- The UE ignores SNPNs that do not broadcast the indication that access using Home SP credentials is supported.
- If the UE is configured with a user-controlled prioritized list of preferred SNPNs if a PLMN ID and NID in the list matches the PLMN ID and NID of an available SNPN, then the UE selects that SNPN.
- If the UE has not been able to select a network based on the above and the UE is configured with a Home SP-controlled prioritized list of preferred SNPNs and Home SP Groups then the UE evaluates the list in priority order as follows.
   1) if a PLMN ID and NID in the list matches the PLMN ID and NID of an available SNPN, then the UE selects that SNPN.
   2) if a Home SP Group ID in the list matches a Home SP Group ID broadcast by an available SNPN, then the UE selects that SNPN.
- If the UE has not been able to select a network based on the above but if an available SNPN broadcasts a supported Home SP ID that matches the UE's Home SP subscription then the UE selects that SNPN.
- If the UE has not been able to select a network based on the above, then the UE selects an available SNPN.

Once the UE has selected an SNPN according to the procedure above, the UE performs the registration procedure. The UE provides the SUCI of the Home SP subscription. The UE is authenticated by the Home SP.

In manual network selection and registration procedure, the UE presents available SNPNs that broadcast the indication that access using Home SP credentials is supported for selection.

Once the user has selected an SNPN from the available networks, the UE performs the registration procedure. The UE provides the SUCI of the Home SP subscription. The UE is authenticated by the Home SP.

Procedures using a PLMN subscription are described.

In automatic network selection and registration procedure, if the UE's RPLMN (Registered PLMN) or (E)HPLMN is not available, then the UE discovers and selects an SNPN or PLMN as follows.
- The UE ignores SNPNs that do not broadcast the indication that access using Home SP credentials is supported.
- If the UE is configured with a user-controlled prioritized list of preferred SNPNs and PLMNs then the UE evaluates the list in priority order as follows.
   1) if a PLMN ID and NID in the list matches the PLMN ID and NID of an available SNPN, then the UE selects that SNPN.
   2) if a PLMN ID in the list matches the PLMN ID of an available PLMN, then the UE selects that PLMN.
- If the UE has not been able to select a network based on the above and the UE is configured with a Home SP-controlled prioritized list of preferred SNPNs, Home SP Groups and PLMNs then the UE evaluates the list in priority order as follows.
   1) if a PLMN ID and NID in the list matches the PLMN ID and NID of an available SNPN, then the UE selects that SNPN.
   2) if a PLMN ID in the list matches the PLMN ID of an available PLMN, then the UE selects that PLMN.
   3) if a Home SP Group ID in the list matches a Home SP Group ID broadcast by an available SNPN, then the UE selects that SNPN.
- If the UE has not been able to select a network based on the above and the UE is configured with a Visited Network Type Preference indicating "SNPN preferred" or "SNPN only" and an available SNPN broadcasts a supported Home SP ID that matches the UE's Home SP subscription then the UE selects that SNPN.
- If the UE has not been able to select a network based on the above:
   1) If the UE has been configured with a Visited Network Type Preference, then the UE selects a network as follows.
      - If the Visited Network Type Preference indicates "PLMN only" then the UE ignores available SNPNs and selects an available PLMN.
      - If the Visited Network Type Preference indicates "PLMN preferred" then the UE tries to first select an available PLMN before trying to select an available SNPN.
      - If the Visited Network Type Preference indicates "SNPN only" then the UE tries to select an available SNPN and ignores the PLMNs.
      - If the Visited Network Type Preference indicates "SNPN preferred" then the UE tries to first select an available SNPN before trying to select a PLMN.
   2) If the UE has not been configured with a Visited Network Type Preference, then the UE selects an available PLMN.

Once the UE has selected an SNPN or PLMN according to the procedure above, the UE performs the registration procedure. The UE provides the SUCI of the Home SP subscription. The UE is authenticated by the Home SP.

In manual network selection and registration procedure, the UE presents the following networks for selection.
- Available SNPNs that broadcast the indication that access using Home SP credentials is supported. SNPNs are only be presented if the UE is configured with a Visited Network Type Preference other than "PLMN only".
- the available PLMNs.

Once the user has selected an SNPN or PLMN from the available networks, the UE performs the registration procedure. The UE provides the SUCI of the Home SP subscription. The UE is authenticated by the Home SP.

Session continuity support is described.

If a UE is registered with a V-SNPN using a Home SP subscription moves to a different V-SNPN that supports access using Home SP credentials for the same Home SP but no N14 interface between source V-SNPN and target V-SNPN, then the UE attempts to transfer PDU sessions to the target V-SNPN using the PDU Session Establishment procedure with Existing PDU Session indication.

If a UE is registered with a V-SNPN using a Home SP subscription (where Home SP = PLMN) moves to a PLMN which does not support the N14 interface between V-SNPN and PLMN, then the UE attempts to transfer PDU sessions to the PLMN using the PDU Session Establishment procedure with Existing PDU Session indication.

If a UE is registered with a PLMN and moves to a V-SNPN that supports access using Home SP credentials for the UE's HPLMN but does not support the N14 interface between V-SNPN and PLMN, then the UE attempts to transfer PDU sessions to the target V-SNPN using the PDU Session Establishment procedure with Existing PDU Session indication.

Session continuity is only supported for PDU sessions anchored in the Home SP network.

As described in solution 1 and/or solution 2 above, in a scenario where a UE accesses to a source network using credentials owned by a separate entity and moves to a target network (e.g., another SNPN and/or PLMN) where no N14 interface exists between the source network and the target network, a PDU session establishment procedure including "Existing PDU session" indication may be performed for handover of a Home-Routed (HR) PDU session. However, before the PDU session establishment procedure for the PDU session to be handed over is finalized in the target network, the AMF of the source network may release the context for the HR PDU session. In this case, the service cannot continue to be provided because the UE has to establish a new HR PDU session in place of the HR PDU session already in use.

Hereinafter, a method for ensuring service continuity between networks that do not have an N14 interface according to the present disclosure will be described.

According to implementations of the present disclosure, a UE may inform the target network that it has moved from the source network during the registration procedure. Upon receiving this, the AMF of the target network may inform the UDM of the home SP of that fact, together with an indication that no N14 interface exists between the target network and the source network. Upon receiving this, the UDM of the home SP may announce the de-registration to the source network, along with an indication that no N14 interface exists between the target network and the source network. Upon receiving this, the AMF of the source network may defer deleting the context for the HR PDU session.

In the following description, new service operations other than conventional service operations may be defined and used for service operations between NFs. Also, in the following description, new N2 messages other than conventional N2 messages may be defined and used for N2 messages exchanged between the AMF and the NG-RAN. Furthermore, in the following description, a new RRC message other than a conventional RRC message may be defined and used for RRC messages exchanged between the NG-RAN and the UE.

In the following description, some of the steps may be performed simultaneously and/or in parallel, or may be performed in an alternating order.

In the following description, the designations of indications and/or parameter information are by way of example only. The designations of such indications and/or parameter information may be substituted with other designations for the procedures/purposes/methods described herein.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

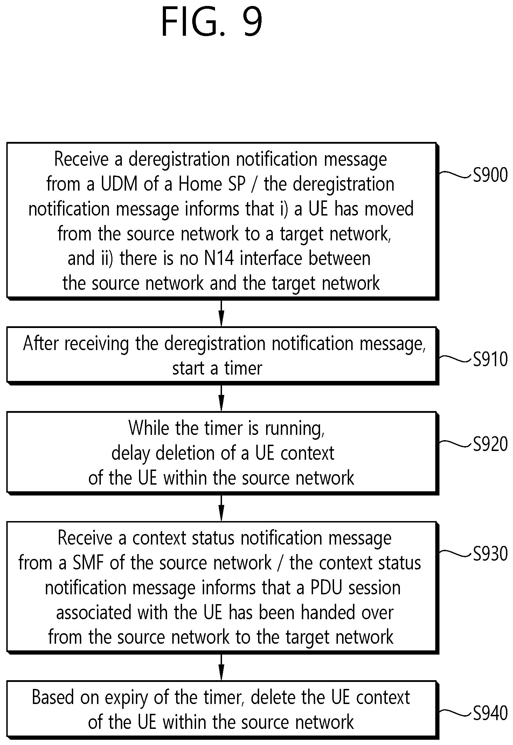

FIG. 9 shows an example of a method performed by an AMF of a source network to which implementations of the present disclosure is applied.

In step S900, the method comprises receiving a deregistration notification message from a UDM of a Home SP. The deregistration notification message informs that i) a UE has moved from the source network to a target network, and ii) there is no N14 interface between the source network and the target network.

In some implementations, the deregistration notification message may be received based on the target network failing to retrieve the UE context via the N14 interface from the source network. In some implementations, the deregistration notification message may be received based on the UDM of the home SP receiving information from an AMF of the target network informing that the UE has moved to the target network which does not have the N14 interface with the source network. That is, if the target network fails to retrieve the UE context via the N14 interface from the source network, the UDM of the home SP receives information from an AMF of the target network informing that the UE has moved to the target network which does not have the N14 interface with the source network, and accordingly, the deregistration notification message may be received.

In step S910, the method comprises, after receiving the deregistration notification message, starting a timer.

In some implementations, the context status notification message may be received based on the SMF of the source network receiving information from the SMF of the home SP informing that the PDU session associated with the UE has been handed over from the source network to the target network. That is, if the SMF of the source network receives information from the SMF of the home SP informing that the PDU session associated with the UE has been handed over from the source network to the target network, the context status notification message may be received accordingly.

In some implementations, the PDU session may be a HR PDU session that is anchored to the home SP.

In some implementations, a value of the timer may be set such that handover of the PDU session can be completed before the timer completes.

In step S920, the method comprises, while the timer is running, delaying deletion of a UE context of the UE within the source network.

In step S930, the method comprises receiving a context status notification message from a SMF of the source network. The context status notification message may inform that a PDU session associated with the UE has been handed over from the source network to the target network.

In step S940, the method comprises, based on expiry of the timer, deleting the UE context of the UE within the source network.

In some implementations, the home SP may have credentials that are used for the UE to access the source network.

In some implementations, the home SP may be a SNPN and/or a PLMN.

In some implementations, the home SP may have an SLA with the source network and/or the target network.

In some implementations, the source network and/or the target network may be a SNPN and/or a PLMN.

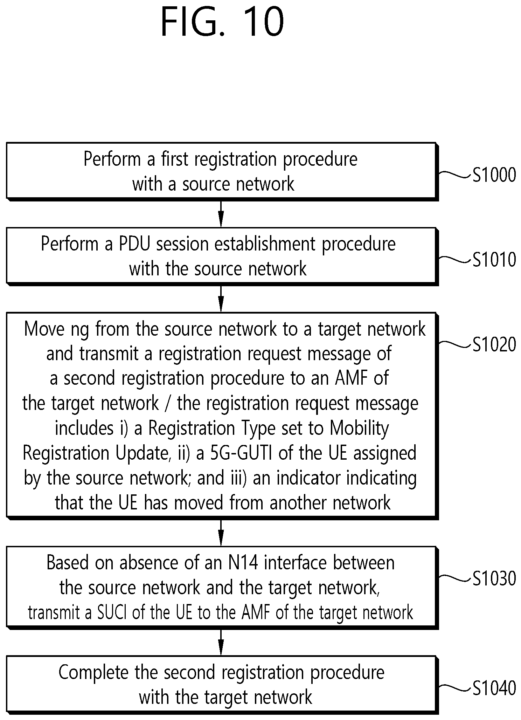

FIG. 10 shows an example of a method performed by a UE to which implementations of the present disclosure is applied.

In step S1000, the method comprises performing a first registration procedure with a source network.

In step S1010, the method comprises performing a PDU session establishment procedure with the source network.

In step S1020, the method comprises moving from the source network to a target network and transmitting a registration request message of a second registration procedure to an AMF of the target network. The registration request message includes i) a Registration Type set to Mobility Registration Update, ii) a 5G-GUTI of the UE assigned by the source network; and iii) an indicator indicating that the UE has moved from another network.

In step S1030, the method comprises, based on absence of an N14 interface between the source network and the target network, transmitting a SUCI of the UE to the AMF of the target network.

In step S1040, the method comprises completing the second registration procedure with the target network.

In some implementations, a PDU session established by the PDU session establishment procedure may be a HR PDU session that is anchored to a Home SP, and the HR PDU session may be handed over from the source network to the target network.

In some implementations, the method may further comprise, after completing the second registration procedure, transmitting to the AMF of the target network a PDU session establishment request message including an "Existing PDU session" indication for the HR PDU session.

In some implementations, the UE may be in communication with at least one of a mobile device, a network, and/or autonomous vehicles other than the UE.

Furthermore, the method in perspective of the UE described above in FIG. 10 may be performed by the first wireless device 100 shown in FIG. 2, the wireless device 100 shown in FIG. 3, and/or the UE 100 shown in FIG. 4.

More specifically, the UE comprises at least one transceiver, at least one processor, and at least one memory operably connectable to the at least one processor. The at least one memory stores instructions to cause the at least one processor to perform operations below.

The UE performs a first registration procedure with a source network.

The UE performs a PDU session establishment procedure with the source network.

The UE moves from the source network to a target network and transmits, via the at least one transceiver, a registration request message of a second registration procedure to an AMF of the target network. The registration request message includes i) a Registration Type set to Mobility Registration Update, ii) a 5G-GUTI of the UE assigned by the source network; and iii) an indicator indicating that the UE has moved from another network.

based on absence of an N14 interface between the source network and the target network, The UE transmits, via the at least one transceiver, a SUCI of the UE to the AMF of the target network.

The UE completes the second registration procedure with the target network.

Furthermore, the method in perspective of the UE described above in FIG. 10 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus operating in a wireless communication system comprises at least one processor, and at least one memory operably connectable to the at least one processor. The at least one processor is adapted to perform operations comprising: performing a first registration procedure with a source network; performing a PDU session establishment procedure with the source network; moving from the source network to a target network and generating a registration request message of a second registration procedure with the target network, wherein the registration request message includes i) a Registration Type set to Mobility Registration Update, ii) a 5G-GUTI of the UE assigned by the source network; and iii) an indicator indicating that the UE has moved from another network; based on absence of an N14 interface between the source network and the target network, generating a SUCI; and completing the second registration procedure with the target network.

Furthermore, the method in perspective of the UE described above in FIG. 10 may be performed by a software code 105 stored in the memory 104 included in the first wireless device 100 shown in FIG. 2.

The technical features of the present disclosure may be embodied directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as synchronous dynamic random access memory (SDRAM), ROM, non-volatile random access memory (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, CRM stores instructions to cause at least one processor to perform operations. The operations comprise: performing a first registration procedure with a source network; performing a PDU session establishment procedure with the source network; moving from the source network to a target network and generating a registration request message of a second registration procedure with the target network, wherein the registration request message includes i) a Registration Type set to Mobility Registration Update, ii) a 5G-GUTI of the UE assigned by the source network; and iii) an indicator indicating that the UE has moved from another network; based on absence of an N14 interface between the source network and the target network, generating a SUCI; and completing the second registration procedure with the target network.

Various implementations of the present disclosure are described below.

### 1. First implementation

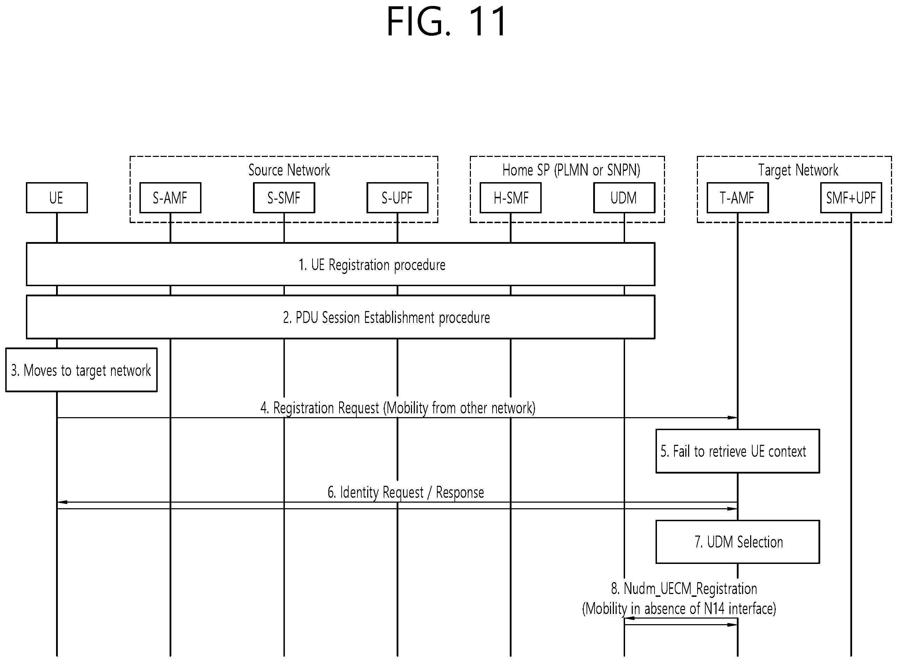

FIGS. 11 to 13 show an example of procedure to support service continuity for HR PDU session in absence of N14 interface between a source network and a target network, to which the first implementation of the present disclosure is applied.

In the first implementation of the present disclosure described in the procedures of FIGS. 11 to 13, the home SP may be an SNPN or a PLMN. The source network and/or the target network may also be SNPNs or PLMNs.

The procedures of FIGS. 11 to 13 assume that the source network, home SP, and target network are all different. However, the procedures of FIGS. 11 to 13 are also applicable when the source network and home SP are the same and/or the target network and home SP are the same. It is assumed that there is no N14 interface between the source network and the target network. It is also assumed that both the source network and the target network have an SLA with the home SP, and therefore have interfaces N8, N16, N9, etc.

First, FIG. 11 is described. FIG. 11 describes steps 1 to 8 of the procedure.

Step 1: The UE is registered in the source network according to the registration procedure described in FIGS. 6 to 7.

Step 2: The UE performs a PDU session establishment procedure to receive services from the source network. The PDU session may be an HR PDU session anchored to the home SP.

In some implementations, the PDU session establishment procedure may be performed for non-roaming and Local BreakOut (LBO) PDU sessions if the source network and home SP are the same.

Step 3: The UE moves from the source network to the target network.

Step 4: When the UE moves out of the tracking area established by the source network and enters a new network area, the UE does not know if there is an N14 interface between the source network and the target network. Therefore, the UE transmits a registration request message with the registration type set to mobility registration update to the AMF of the target network via the NG-RAN of the target network. The registration request message may include the 5G-GUTI assigned by the source network. In addition, to inform the AMF of the target network that the UE has moved from another network, the UE may include a "Mobility from other network" indication in the registration request message.

In some implementations, the UE may select a new SNPN and/or PLMN and perform initial registration with the selected target network because it has moved out of the source network (e.g., SNPN) it is currently being served. In this case, it may go directly to step 7, which will be discussed later. In this case, to inform the AMF of the target network that the UE has moved from another network, the UE may still include a "Mobility from other network" indication in the registration request message.

In some implementations, a new registration type may be set and transmitted to the AMF of the target network instead of the "Mobility from other network" indication. Alternatively, the source network's 5GMM status, i.e., 5GMM-REGISTERED, may be indicated to indicate that it has moved from another network.

Step 5: The AMF of the target network finds the AMF of the source network and attempts to retrieve the UE context using the 5G-GUTI received from the UE in step 4. However, since there is no N14 interface between the AMF of the target network and the AMF of the source network, the AMF of the target network fails to retrieve the UE context.

Step 6: The AMF of the target network uses the ID request/response procedure to obtain the SUCI of the UE.

Step 7: The AMF of the target network uses the SUCI obtained in step 6 to select a UDM within the home SP.

Step 8: The AMF of the target network registers with the UDM of the home SP using the Nudm_UECM_Registration procedure. In this case, based on the information obtained in steps 4 and 6 and the information configured in the AMF of the target network (e.g., presence of N14 interface, SLA), the AMF of the target network may know that the UE has moved from the source network to the target network and that there is no N14 interface between the two networks, and may inform the UDM of the home SP through the "Mobility in absence of N14 interface" indication.

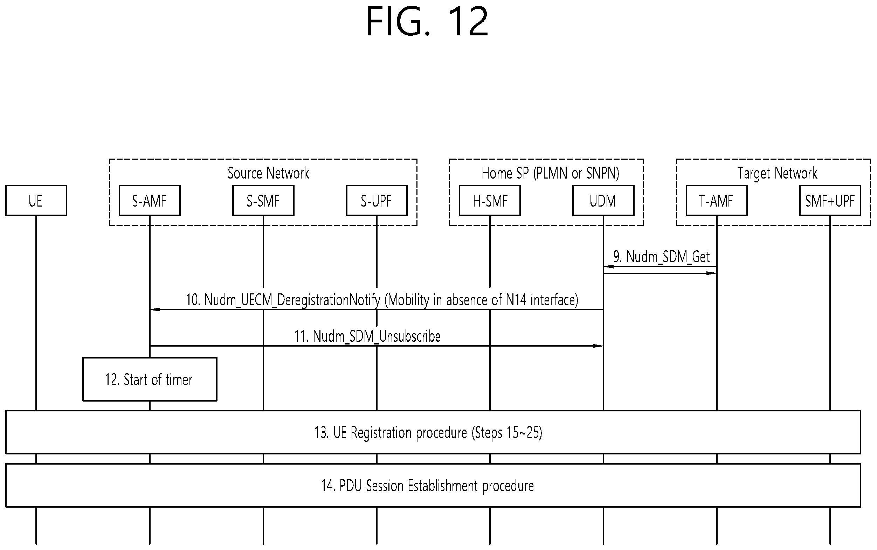

FIG. 12 is now described. FIG. 12 describes steps 9 to 14 of the procedure.

Step 9: The AMF of the target network obtains the subscription data for the UE from the UDM using the Nudm_SDM_Get procedure. Then, it performs Nudm_SDM_Subscribe.

Step 10: The UDM located in the home SP notifies the AMF of the source network that it has been deregistered using the Nudm_UECM_DeregistrationNotification procedure. In this case, the UDM of the home SP may add a "Mobility in absence of N14 interface" indication in the deregistration notification message to indicate that the UE has now moved from the source network to the target network and that there is no N14 interface between the two networks.

In some implementations, the indication in the deregistration notification message transmitted by the UDM of the home SP to the AMF of the source network may indicate to delete UE's context after a period of time rather than immediately.

In some implementations, the UDM of the home SP may not transmit a deregistration notification message to the AMF of the source network immediately after receiving a registration request from the AMF of the target network, but may notify the deregistration to the AMF of the source network after a period of time. In this case, the UDM of the home SP may indicate that it is an initial registration, so that the AMF of the source network can immediately clean up the session associated with the UE and delete the UE context.

Step 11: The AMF of the source network performs the Nudm_SDM_Unsubscribe procedure on the UDM, provided that it does not have any additional UE context for non-3GPP access.

Step 12: The AMF of the source network starts a timer, based on the receipt of the "Mobility in absence of N14 interface" indication in step 10. Until the timer ends, the AMF of the source network does not initiate a procedure to delete the UE context within the source network.

Step 13: Steps 15 to 25 of the registration procedure described in FIGS. 6 and 7 are performed.

Step 14: If required for service continuity, the UE attempts to perform a handover to the target network for the HR PDU session anchored to the home SP, i.e., the UE performs a PDU session establishment procedure to the target network, by including the PDU session ID for which it wants to perform a handover and the indication "Existing PDU session". The corresponding PDU session may be an HR PDU session anchored to the home SP.

In some implementations, if the target network and the home SP are the same, the PDU session establishment procedure may be performed for non-roaming and LBO PDU sessions.

In some implementations, the UE may not be able to distinguish whether a PDU session is an LBO PDU session or an HR PDU session. Therefore, the UE may perform the handover for all PDU sessions. If the handover is not possible because the PDU session is an LBO PDU session, the target network may reject the handover. To avoid such unnecessary attempts, when establishing the PDU session in step 2 of FIG. 11, the SMF of the source network may include information about whether the PDU session is an LBO PDU session or an HR PDU session in the PDU session establishment accept message. Alternatively, in step 13, when the UE performs registration with the target network, the AMF of the target network may inform the UE in the registration accept message about the PDU sessions available for handover based on the subscription information obtained from the UDM. Based on the obtained information, the UE may perform handover only for HR PDU sessions.

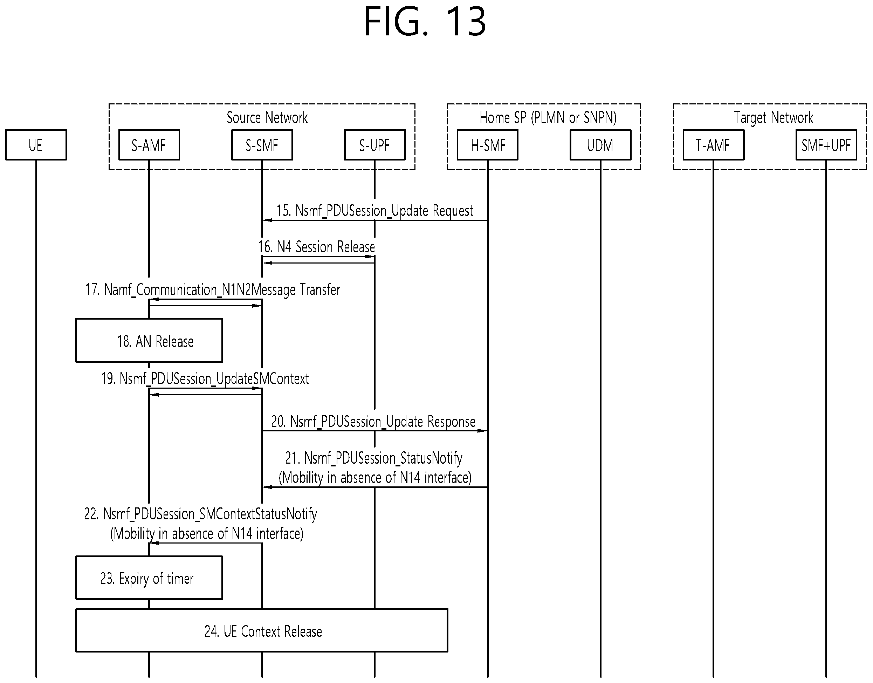

FIG. 13 is now described. FIG. 13 describes steps 15 to 24 of the procedure.

Step 15: After the handover of the PDU session is completed through the procedure in step 14, the SMF located in the home SP requests the release of the corresponding PDU session from the SMF of the source network (V-SMF). The SMF of the home SP may include the "Mobility in absence of N14 interface" indication and/or the release cause in the Nsmf_PDUSession_Update request message in order to inform the SMF of the source network exactly about the release cause.

In addition, the SMF of the home SP requests the SMF of the source network not to inform the UE of the release of the corresponding PDU session. This may be done based on the "Mobility in absence of N14 interface" indication and/or release cause transmitted by the SMF of the home SP.

Step 16: The SMF of the source network releases the UP resources associated with the corresponding PDU session existing within the UPF of the source network through the N4 session release procedure.

Step 17: If user plane resources are allocated in the NG-RAN, the SMF of the source network forwards a release request to the AMF of the source network using the Namf_Communication_N1N2MessageTransfer procedure, in order to to delete the context and user plane resources associated with the corresponding PDU session in the NG-RAN of the source network.

Step 18: The AMF of the source network uses the NG PDU session resource release command message to request the NG-RAN of the source network to release the context and user plane resources for the PDU session.

After releasing the context and user plane resources associated with the corresponding PDU session, the NG-RAN of the source network responds to the AMF of the source network with an NG PDU session resource release response message.

Step 19: The AMF of the source network informs the SMF of the source network that the NG-RAN has released the PDU session resource using the Nsmf_PDUSession_UpdateSMContext procedure.

Step 20: The SMF of the source network transmits an Nsmf_PDUSession_Update response message to indicate that the release of the PDU session requested by the SMF of the home SP in step 15 has been successfully processed.

Step 21: The SMF of the home SP transmits an Nsmf_PDUSession_StatusNotify message with the "Mobility in absence of N14 interface" indication and/or the release cause to the SMF of the source network, informing that the corresponding PDU session has been handed over from the source network to the target network and requesting to release all contexts associated with the corresponding PDU session.

Step 22: The SMF of the source network transmits an Nsmf_PDUSession_SMContexStatusNotify message with the "Mobility in absence of N14 interface" indication and/or the release cause to the AMF of the source network, informing that the corresponding PDU session has been handed over from the source network to the target network and requesting to release all contexts associated with the corresponding PDU session.

In some implementations, if there are multiple HR PDU sessions anchored to the home SP via the source network, the UE may repeat steps 14 to 22 to handover the required PDU sessions to the target network.

Step 23: The timer operated in step 12 of FIG. 12 is terminated.

In some implementations, it may be assumed that the timer is set to a value sufficient to move all HR PDU sessions already established in the source network for the UE to the target network before the timer ends.

Step 24: The AMF of the source network initiates a procedure to delete all contexts associated with the UE within the source network. In this case, any LBO PDU sessions established for the UE are also released.

According to the first implementation of the present disclosure, in the registration procedure to the target network, the deletion of contexts for previously established HR PDU sessions by the source network can be delayed and/or withheld. Thus, service continuity can be supported through an existing HR PDU session without the need for additional procedures to establish a new PDU session.

### 2. Second implementation

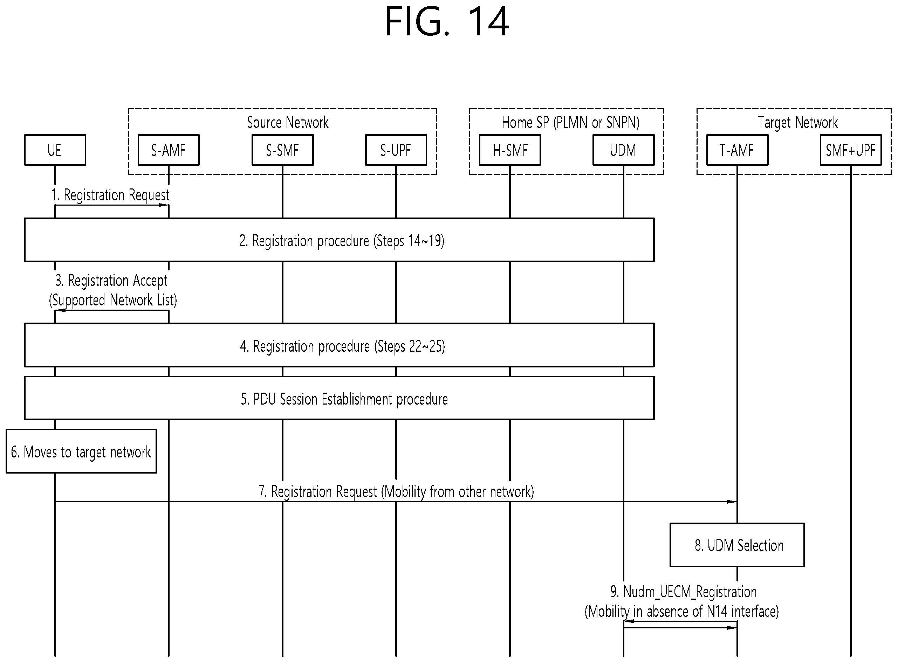

FIG. 14 shows an example of procedure to support service continuity for HR PDU session in absence of N14 interface between a source network and a target network, to which the second implementation of the present disclosure is applied.

In the second implementation of the present disclosure described in the procedures of FIG. 14, the home SP may be an SNPN or a PLMN. The source network and/or the target network may also be SNPNs or PLMNs.

The procedures of FIGS. 14 assume that the source network, home SP, and target network are all different. However, the procedures of FIGS. 14 are also applicable when the source network and home SP are the same and/or the target network and home SP are the same. It is assumed that there is no N14 interface between the source network and the target network. It is also assumed that both the source network and the target network have an SLA with the home SP, and therefore have interfaces N8, N16, N9, etc.

Step 1: To register with the source network, the UE transmits a registration request message to the AMF of the source network via the NG-RAN of the source network.

In some implementations, the registration request message may include a Preferred Network List. The Preferred Network List may include network IDs (e.g., PLMN ID and/or combination of PLMN ID and NID) and priority information for other networks with which the UE is currently can register. If there are multiple networks with which the UE can register, serving continuity to the network with the highest priority may be considered first.

In some implementations, the network IDs and priority information for the PLMN and SNPN with which the UE has established an SLA may be pre-configured in the UE. That is, when the UE wishes to register with a PLMN, the UE may include in the Preferred Network List the ID of the SNPN that has established an SLA with that PLMN (e.g., a combination of the PLMN ID and NID) and the priority information therefor. If the UE wishes to register with a SNPN, the UE may include in the Preferred Network List the ID of the PLMN that has established an SLA with that SNPN and priority information therefor. If the UE does not know if it has established an SLA, it may only provide information about the networks that the UE can register with, regardless of the SLA. In this case, the handover to the network with which it has established an SLA among the available networks may be prioritized.

In some implementations, the network ID and priority information for PLMNs and SNPNs with which the UE has established an SLA may be updated via the UE configuration update procedure.

Step 2: Steps 4 to 19 of the registration procedure described in FIGS. 6 and 7 are performed.

Step 3: If the UE's registration request is acceptable, the AMF of the source network determines the Supported Network List available to the UE based on the Preferred Network List obtained from the UE, subscriber information obtained from the UDM, presence of N14 interface, SLA, etc. The network IDs included in the Supported Network List are determined within the Preferred Network List transmitted by the UE.

To notify the UE of the registration accept and to create a UE context in the NG-RAN of the source network, the AMF of the source network forwards a NGAP INITIAL CONTEXT SETUP REQUEST message to the NG-RAN containing the Supported Network List and the registration accept message. The NG-RAN of the source network forwards the registration accept message received from the AMF of the source network to the UE. The registration accept message includes the Supported Network List.

In some implementations, depending on the subsequent mobility situation of the UE, the NG-RAN of the source network may trigger an Xn-based or NG-based handover using the N14 interface for networks included in the Supported Network List. To do so, the NG-RAN of the source network may pre-command the UE to take measurements for connected mode mobility using RRC messages.

In some implementations, a DOWNLINK NAS TRANSPORT message may be utilized instead of the NGAP INITIAL CONTEXT SETUP REQUEST message.

Step 4: Steps 22 to 25 of the registration procedure described in FIGS. 6 and 7 are performed.

Step 5: The UE performs the PDU session establishment procedure to receive services from the source network. The PDU session may be an HR PDU session anchored to the home SP.

In some implementations, the PDU session establishment procedure may be performed for non-roaming and LBO PDU sessions if the source network and home SP are the same.

Step 6: The UE moves from the source network to the target network.

In some implementations, the NG-RAN of the source network may know in advance that an N14 interface exists between the source network and the target network based on the Supported Network List received in step 3, and may initiate an Xn-based or NG-based handover procedure to provide service continuity to the UE.

Step 7: Since the UE already knows that no N14 interface exists between the source network and the target network based on the Supported Network List received in step 3, the UE transmits a registration request message with registration type set to Initial Registration to the AMF of the target network via the NG-RAN of the target network. In addition, the registration request message may include the SUCI of the UE so that the AMF of the target network can find the UDM located in the home SP.

Further, to inform the AMF of the target network that the UE has moved from another network, the UE may include a "Mobility from other network" indication in the registration request message.

In some implementations, a new registration type may be set and transmitted to the AMF of the target network instead of the "Mobility from other network" indication. Alternatively, the source network's 5GMM status, i.e., 5GMM-REGISTERED, may be indicated to indicate that it has moved from another network.

Step 8: The AMF of the target network uses the SUCI obtained in step 7 to select a UDM within the home SP.

Step 9: The AMF of the target network registers with the UDM in the home SP using the Nudm_UECM_ Registration procedure. In this case, based on the information obtained in step 7 and the information configured in the AMF of the target network (e.g., presence of N14 interface, SLA, etc.), the AMF of the target network may know that the UE has moved from the source network to the target network and that there is no N14 interface between the two networks, and may notify the UDM of the home SP through the "Mobility in absence of N14 interface" indication.

The operations described in FIGS. 12 and 13 may then be performed. A detailed description thereof will be omitted.

According to the second implementation of the present disclosure, in the registration procedure to the target network, the deletion of contexts for previously established HR PDU sessions by the source network can be delayed and/or withheld. Thus, service continuity can be supported through an existing HR PDU session without the need for additional procedures to establish a new PDU session.

According to the second implementation of the present disclosure, the source network can proactively inform the UE whether it supports the N14 interface in the registration procedure. Thus, the UE can directly perform the initial registration procedure with the target network based on the network configuration and reduce the registration-related signaling between the UE and the AMF of the target network.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by an Access and mobility Management Function, AMF, of a source network configured to operate in a wireless communication system, the method being **characterized by**:
receiving (S900) a deregistration notification message from a United Data Management, UDM, of a Home Service Provider, Home SP, wherein the deregistration notification message informs that i) a User Equipment, UE, has moved from the source network to a target network, and ii) there is no N14 interface between the source network and the target network;
after receiving the deregistration notification message, starting (S910) a timer;
while the timer is running, delaying (S920) deletion of a UE context of the UE within the source network;
receiving (S930) a context status notification message from a Session Management Function, SMF, of the source network, wherein the context status notification message informs that a Protocol Data Unit, PDU, session associated with the UE has been handed over from the source network to the target network; and
based on expiry of the timer, deleting (S940) the UE context of the UE within the source network.

2. The method of claim 1, wherein the deregistration notification message is received based on the target network failing to retrieve the UE context via the N14 interface from the source network.

3. The method of claim 2, wherein the deregistration notification message is received based on the UDM of the home SP receiving information from an AMF of the target network informing that the UE has moved to the target network which does not have the N14 interface with the source network.

4. The method of any one of claims 1 to 3, wherein the context status notification message is received based on the SMF of the source network receiving information from the SMF of the home SP informing that the PDU session associated with the UE has been handed over from the source network to the target network.

5. The method of claim 4, wherein the PDU session is a Home-Routed, HR, PDU session that is anchored to the home SP.

6. The method of claim 4, wherein a value of the timer is set such that handover of the PDU session can be completed before the timer completes.

7. The method of any one of claims 1 to 6, wherein the home SP has credentials that are used for the UE to access the source network.

8. The method of any one of claims 1 to 7, wherein the home SP is a Standalone Non-Public Network, SNPN, and/or a Public Land Mobile Network, PLMN.

9. The method of any one of claims 1 to 8, wherein the home SP has a Service Level Agreement, SLA, with the source network and/or the target network.

10. The method of any one of claims 1 to 9, wherein the source network and/or the target network is a SNPN and/or a PLMN.

## Patentansprüche

1. Verfahren, das von einer Zugangs- und Mobilitätsmanagementfunktion, AMF, eines Quellnetzes durchgeführt wird, das so konfiguriert ist, dass es in einem drahtlosen Kommunikationssystem arbeitet, wobei das Verfahren durch Folgendes gekennzeichnet ist:
Empfangen (S900) einer Abmeldenachricht von einem Vereinigten Datenmanagement, UDM, eines Heimatdienstanbieters, Heimat-SP, wobei die Abmeldenachricht darüber informiert, dass i) eine Benutzerausrüstung, UE, vom Quellnetz in ein Zielnetz umgezogen ist und ii) es keine N14-Schnittstelle zwischen dem Quellnetz und dem Zielnetz gibt;
Starten (S910) eines Timers nach dem Empfangen der Abmeldenachricht;
Verzögern (S920) des Löschens eines UE-Kontexts der UE innerhalb des Quellnetzes während der Timer läuft;
Empfangen (S930) einer Kontextstatusnachricht von einer Sitzungsverwaltungsfunktion, SMF, des Quellnetzes, wobei die Kontextstatusnachricht darüber informiert, dass eine mit der UE assoziierte Protokolldateneinheit, PDU,-Sitzung vom Quellnetz an das Zielnetz übergeben wurde; und
Löschen (S940) des UE-Kontextes der UE innerhalb des Quellnetzes basierend auf dem Ablauf des Timers.

2. Verfahren nach Anspruch 1, wobei die Abmeldenachricht basierend auf dem Zielnetz empfangen wird, das den UE-Kontext nicht über die N14-Schnittstelle aus dem Quellnetz abrufen kann.

3. Verfahren nach Anspruch 2, wobei die Abmeldenachricht basierend auf dem UDM des Heimat-SP empfangen wird, der Informationen von einem AMF des Zielnetzes empfängt, die darüber informieren, dass die UE in das Zielnetz umgezogen ist, das nicht über die N14-Schnittstelle zum Quellnetz verfügt.

4. Verfahren nach einem der Ansprüche 1 bis 3, wobei die Kontextstatusnachricht basierend auf der SMF des Quellnetzes empfangen wird, die Informationen von der SMF des Heimat-SP empfängt, die darüber informieren, dass die mit der UE verbundene PDU-Sitzung vom Quellnetz an das Zielnetz übergeben wurde.

5. Verfahren nach Anspruch 4, wobei es sich bei der PDU-Sitzung um eine heimgeleitete, HR, PDU-Sitzung handelt, die mit dem Heimat-SP verankert ist.

6. Verfahren nach Anspruch 4, wobei ein Wert des Timers so eingestellt ist, dass die Übergabe der PDU-Sitzung abgeschlossen werden kann, bevor der Timer abgeschlossen ist.

7. Verfahren nach einem der Ansprüche 1 bis 6, wobei der Heimat-SP Zugangsdaten hat, die für das UE verwendet werden, um auf das Quellnetz zuzugreifen.

8. Verfahren nach einem der Ansprüche 1 bis 7, wobei der Heimat-SP ein eigenständiges nicht öffentliches Netz, SNPN, und/oder ein öffentliches Landmobilfunknetz, PLMN, ist.

9. Verfahren nach einem der Ansprüche 1 bis 8, wobei der Heimat-SP eine Dienstleistungsvereinbarung, SLA, mit dem Quellnetz und/oder dem Zielnetz hat.

10. Verfahren nach einem der Ansprüche 1 bis 9, wobei das Quellnetzwerk und/oder das Zielnetzwerk ein SNPN und/oder ein PLMN ist.

## Revendications

1. Procédé réalisé par une fonction de gestion d'accès et de mobilité, AMF, d'un réseau source configuré pour fonctionner dans un système de communication sans fil, le procédé étant **caractérisé par** :
la réception (S900) d'un message de notification de désenregistrement d'une gestion de données unifiée, UDM, d'un fournisseur de service domestique, Home SP, dans lequel le message de notification de désenregistrement indique que i) un équipement utilisateur, UE, s'est déplacé du réseau source à un réseau cible, et ii) aucune interface N14 n'existe entre le réseau source et le réseau cible ;
après réception du message de notification de désenregistrement, le démarrage (S910) d'un temporisateur ;
pendant le fonctionnement du temporisateur, le retardement (S920) de la suppression d'un contexte UE de l'UE dans le réseau source ;
la réception (S930) d'un message de notification d'état de contexte provenant d'une fonction de gestion de session, SMF, du réseau source, le message de notification d'état de contexte indiquant qu'une session d'unité de données de protocole, PDU, associée à l'UE a été transmise du réseau source au réseau cible ; et
sur la base de l'expiration du temporisateur, la suppression (S940) du contexte UE de l'UE dans le réseau source.

2. Procédé selon la revendication 1, dans lequel le message de notification de désenregistrement est reçu sur la base du fait que le réseau cible ne parvient pas à récupérer le contexte UE par le biais de l'interface N14 à partir du réseau source.

3. Procédé selon la revendication 2, dans lequel le message de notification de désenregistrement est reçu sur la base du fait que l'UDM du home SP reçoit des informations provenant d'une AMF du réseau cible indiquant que l'UE s'est déplacé vers le réseau cible qui n'a pas l'interface N14 avec le réseau source.

4. Procédé selon l'une quelconque des revendications 1 à 3, dans lequel le message de notification d'état de contexte est reçu sur la base du fait que la SMF du réseau source reçoit des informations provenant de la SMF du home SP indiquant que la session PDU associée à l'UE a été transmise du réseau source au réseau cible.

5. Procédé selon la revendication 4, dans lequel la session PDU est une session PDU routée à domicile, HR, qui est ancrée au home SP.

6. Procédé selon la revendication 4, dans lequel une valeur du temporisateur est définie de sorte que le transfert de la session PDU puisse être terminé avant le temporisateur ne termine.

7. Procédé selon l'une quelconque des revendications 1 à 6, dans lequel le home SP présente des identifiants qui sont utilisés pour que l'UE accède au réseau source.

8. Procédé selon l'une quelconque des revendications 1 à 7, dans lequel le home SP est un réseau non public autonome, SNPN, et/ou un réseau mobile terrestre public, PLMN.

9. Procédé selon l'une quelconque des revendications 1 à 8, dans lequel le home SP dispose d'un accord de niveau de service, SLA, avec le réseau source et/ou le réseau cible.

10. Procédé selon l'une quelconque des revendications 1 à 9, dans lequel le réseau source et/ou le réseau cible est un SNPN et/ou un PLMN.
